# EUROPEAN PATENT APPLICATION

(11) **EP 3 118 780 A1**
(43) Date of publication of application: **18.01.2017**
(21) Application number: 15762341.4
(22) Date of filing: 12.02.2015
(51) Int. Cl.: G06Q 10/00, G08B 21/02, G08B 25/04, G08B 31/00

(54) **LIFESTYLE BEHAVIOR ESTIMATING DEVICE, AND PROGRAM**

(30) Priority: 11.03.2014 JP 2014048001
(71) Applicant: Panasonic Intellectual Property Management Co., Ltd., Osaka-shi, Osaka 570-6207 (JP)
(72) Inventor: NISHIYAMA, Takashi, Osaka-shi, Osaka 540-6207 (JP); SHIMIZU, Noriyoshi, Osaka-shi, Osaka 540-6207 (JP); FUJITA, Tomohiko, Osaka-shi, Osaka 540-6207 (JP); NAKAHARA, Tomoharu, Osaka-shi, Osaka 540-6207 (JP)
(74) Representative: Appelt, Christian W.
(86) International application number: PCT/JP2015/000646
(87) International publication number: WO 2015/136839

(57) **Abstract**

The present invention is aimed to improve the accuracy of inference of a living activity. In a living activity inference device (1), an inferrer (10) calculates, for each of multiple kinds of living activities, an occurrence probability defining a probability that a corresponding one of the multiple kinds of living activities occurs, based on an operational state of one or more electric appliances (3) determined by a detector (16) for each of sections at an inference target time by use of prior probabilities, first conditional probabilities, and second conditional probabilities, and infers that a living activity having a highest occurrence probability has occurred at the inference target time. The prior probabilities each define a probability at which a corresponding one of the multiple kinds of living activities occurs in one day. The first conditional probabilities each define active and inactive probabilities of the one or more electric appliances (3) belonging to a corresponding one of the sections under a condition where a corresponding one of the multiple kinds of living activities occurs. The second conditional probabilities each define probabilities of occurrence of a corresponding one of the multiple kinds of living activities within respective time periods divided from one day under a condition where the corresponding one of the multiple kinds of living activities occurs.

## Description

### Technical Field

The present invention relates to living activity inference devices and programs, and more particularly, to a living activity inference device for inferring a living activity based on a resource consumption status in a residence and a program therefor.

### Background Art

In the past, there has been proposed a living activity inference device for inference of a living activity of a resident based on an operational state of an electric appliance used in a residence (see Document 1 [WO 2013/157175 A1]). In this living activity inference device, a group of rules are stored. Each rule provides a conclusion indicative of an activity class defined by classification of the living activity, in response to a given condition including an appliance class assigned to the electric appliance for classifying a type of the electric appliance and an operational state of the electric appliance. When receiving operational states (an event such as a start of working and an end of working) of electric appliances, the activity inference device applies, to the group of rules, the received operational states and the appliance classes of the electric appliances to extract the activity class as a result.

The group of rules used by the living activity inference device disclosed in Document 1 is fixed. Hence, an actual living activity may not correctly conform to that derived from the group of rules.

### Summary of Invention

An objective of the present invention is to propose a living activity inference device having an improved inference accuracy of the living activity compared to a conventional configuration, and a program for realizing the living activity inference device by a computer.

A living activity inference device according to an aspect of the present invention includes an obtainer, an appliance operation detector, a storage device, an activity inferrer, and an outputter. The obtainer is configured to obtain, for each of sections of a residence, data on a resource consumption status of one or more appliances belonging to a corresponding one of the sections. The appliance operation detector is configured to determine, for each of the sections, an operational state indicative of whether the one or more appliances belonging to a corresponding one of the sections are active or inactive, from the data on the resource consumption status obtained by the obtainer for each of the sections. The storage device is configured to preliminarily store prior probabilities, first conditional probabilities, and second conditional probabilities. The prior probabilities each define a probability at which a corresponding one of pre-defined multiple kinds of living activities occurs in one day. The first conditional probabilities each define active and inactive probabilities of the one or more appliances belonging to a corresponding one of the sections under a condition where a corresponding one of the multiple kinds of living activities occurs. The second conditional probabilities each define probabilities of occurrence of a corresponding one of the multiple kinds of living activities within respective time periods divided from one day under a condition where the corresponding one of the multiple kinds of living activities occurs. The activity inferrer is configured to calculate, for each of the multiple kinds of living activities, an occurrence probability defining a probability that a corresponding one of the multiple kinds of living activities occurs at an inference target time, according to Bayes' theorem based on the operational state of the one or more appliances determined by the appliance operation detector for each of the sections at the inference target time by use of the prior probabilities, the first conditional probabilities, and the second conditional probabilities. The activity inferrer is further configured to infer that a living activity having a highest occurrence probability of the multiple kinds of living activities has occurred at the inference target time.

A program according to an aspect of the present invention is a program, when executed by a computer, causing the computer to function as the living activity inference device described above.

A recoding medium on which the program is recorded may be a computer readable recoding medium.

### Brief Description of Drawings

FIG. 1 is a block diagram according to an embodiment.
FIG. 2 is a graph showing conditional probabilities stored in a storage device according to the embodiment.
FIG. 3 is another graph showing conditional probabilities stored in the storage device according to the embodiment.
FIG. 4 is another graph showing conditional probabilities stored in the storage device according to the embodiment.
FIG. 5 is a graph showing prior probabilities stored in the storage device according to the embodiment.
FIG. 6 is a diagram showing transition probabilities stored in the storage device according to the embodiment.
FIG. 7 is a graph showing time variations of amounts of power consumed by electric appliances according to the embodiment.
FIG. 8 is a diagram of a graphical model illustrating a stochastic reasoning according to the embodiment.
FIG. 9 is a diagram of a graphical model illustrating a stochastic reasoning using a transition probability according to the embodiment.
FIG. 10 is a graph showing a history of inferred coming-home time according to the embodiment.
FIG. 11 is a graph showing a frequency distribution of inferred coming-home time according to the embodiment.

### Description of Embodiments

A living activity inference device according to the present embodiment is configured to infer a living activity of a resident (user) based on a resource consumption status, with regard to each of sections in a residence, of one or more appliances situated in a corresponding section. The sections indicate spatial regions in the residence, and are classified according to their intended purposes in the residence. The section may conceptually indicate a particular location such as a room of the residence, and/or an intended purpose of a particular location. The resource consumed in the residence may include energy resources such as electricity and gas, and water.

The present embodiment is explained according to a case where the appliance consuming the resource is an electric appliance. In other words, the living activity inference device described hereinafter is configured to determine operational states of the electric appliances based on consumption statuses of power consumed by the electric appliances belonging to the sections, and to infer the living activity of the resident based on the determined operational states of the electric appliances.

The living activity inference device is configured to infer which one of pre-defined multiple living activities corresponds to a living activity that has been actually performed by the resident at an inference target time. In the embodiment, three distinguished states, an at-home state, a go-out state, and a sleep state, are defined as the multiple living activities, and a living activity at the inference target time is inferred from them. The at-home state indicates a state where the resident is at home but is not asleep.

The living activity inference device may be configured to detect change in the living activity as an event performed by the resident. The living activity inference device is configured to: detect change in the living activity from the at-home state to the sleep state, as a go-to-bed event; detect change in the living activity from the sleep state to the at-home state, as a wake-up event; detect change in the living activity from the at-home state to the go-out state as a going-out event; and detect change in the living activity from the go-out state to the at-home state as a coming-home event.

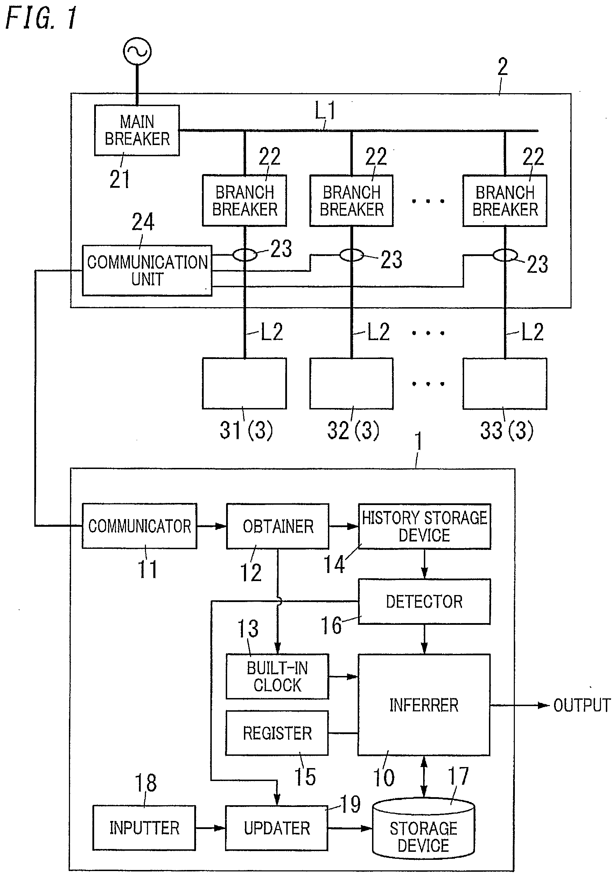

As shown in FIG. 1, one main breaker **21** and multiple branch breakers **22** are housed in a distribution board **2** that is installed in the residence. A trunk line **L1** extends from the main breaker **21,** and is branched to branch lines **L2** by the branch breakers **22,** respectively, to deliver electric power to electric appliances **3** connected to the branch lines **L2.** In the example of FIG. 1, each branch line **L2** is connected with only one electric appliance **3,** but two or more electric appliances **3** may be connected to one branch line **L2.** The branch line **L2** may be connected with an outlet (receptacle) for receiving a plug of the electric appliance **3.**

In the present embodiment, each room (for example, living room, kitchen, bed room, and the like) of the residence corresponds to one section. Each branch line **L2** is connected with one or more electric appliances **3** that exist in a same section. Also, two or more branch lines **L2** may be associated with one section. Hereinafter, one or more electric appliances **3** connected to the branch line(s) **L2** associated with the living room are referred to as an electric appliance **31,** one or more electric appliances **3** connected to the branch line(s) **L2** associated with the kitchen are referred to as an electric appliance **32,** and one or more electric appliances **3** connected to the branch line(s) **L2** associated with the bed room are referred to as an electric appliance **33.**

The living activity inference device of the present embodiment is configured to obtain, for each of the branch lines **L2,** data on consumed power. Hereinafter, the data on power obtained for each of the branch lines **L2** is referred to as "power data". As shown in FIG. 1, power sensors **23** are provided on load sides of the branch breakers **22,** respectively so as to individually measure the power sent through the branch lines **L2.** Each power sensor **23** is configured to detect a current flowing through a corresponding branch line **L2** and a voltage between lines of the corresponding branch line **L2.** For example, a Rogowski coil is used for detecting a current. An output signal from each of the power sensors **23** is supplied to a communication unit **24,** and then supplied from the communication unit **24** to the living activity inference device **1.**

A place to obtain the power data of one or more electric appliances **3** may be appropriately selected from various places, if necessary. Such a place may be selected from: the trunk line **L1**; an electric circuit branched from the branch line **L2;** an outlet connected to the branch line **L2;** and an individual electric appliance connected to the branch line **L2.** Foe example, the power sensors may be provided to the outlets of the branch lines **L2,** respectively, and the communication unit **24** may collect respective power data measured by the power sensors of the outlets and output the power data to the living activity inference device **1.** Alternatively, when the electric appliance **3** may include a communication function, the power sensor may be provided to the electric appliance **3,** and the communication unit **24** may collect the power data measured by the power sensor of the electric appliance **3** and output the power data to the living activity inference device **1.**

The living activity inference device **1** includes a main hardware component including a device that execute a program to realize functions described later. A specific example of the device is a microcomputer including a processor and a memory. Therefore, the living activity inference device 1 may be realized by a dedicated device, or can be realized by another device such as a general purpose computer, a tablet terminal, and a smartphone when executing a program for implementing functions described later. The program may be supplied through a telecommunication network such as the Internet and mobile network, or through a computer readable recording medium. The recording medium may be an optical disk, a hard disk, a non-volatile semiconductor memory, or the like.

As shown in FIG. 1, the living activity inference device **1** includes an inferrer **10** (activity inferrer), an obtainer **12,** a detector **16** (appliance operation detector), and a storage device **17.** The living activity inference device **1** of the present embodiment further includes an inputter **18** and an updater **19.** The living activity inference device **1** of the present embodiment includes, in addition to the above components, a communicator **11** (communication interface), a built-in clock **13,** a history storage device **14,** and a register **15.**

The communicator **11** is configured to communicate with the communication unit **24** in the distribution board **2.** The communicator **11** receives, from the communication unit **24,** the power data of the respective branch lines **L2** that has measured every predetermined measurement time (e.g., one second, one minute, or the like), and outputs the received power data to the obtainer **12.**

The obtainer **12** is configured to calculate the amount of energy per unit time, from the power data supplied every measurement time from the communicator **11.** The unit time is an integer multiplier of the measurement time and may fall within a range of 30 seconds to 10 minutes, for example. The power sensor **23** may be configured to measure the amount of power every time segment, which is defined by equally dividing the measurement time, and the communication unit **24** may be configured to transmit, to the living activity inference device **1,** an average, per the measurement time, of the amounts of power measured every time segments. In this case, the obtainer **12** can calculate the amount of energy by multiplying the measuring time by the average of the amounts of power supplied from the communication unit **24.** The communication unit **24** may be configured to transmit, to the living activity inference device **1,** the amount of energy per the time segment calculated from the amounts of power measured by the power sensors **23.**

The built-in clock **13** is configured to indicate current date and time. The built-in clock **13** may be realized by a real-time clock.

The history storage device **14** is configured to record the amount of energy for each branch line **L2** calculated by the obtainer **12** in association with a time stamp corresponding to the current date and time indicated by the built-in clock **13.** In other words, the history storage device **14** stores time series data of the amount of energy for each branch line **L2.** A storage capacity of the history storage device **14** is selected such that the history storage device **14** can store the time series data of the amount of energy for at least some days, and is preferably selected such that the history storage device **14** can store the time series data of the amount of energy for one year or more.

The register **15** is configured to register pieces of information for individually distinguishing the electric appliances **3** in the residence in association with pieces of information for distinguishing individual groups of the branch lines **L2.** The register **15** associates the electric appliances **3** with the branch lines **L2,** and also associates the pieces of information for individually distinguishing the electric appliances **3** with pieces of information for individually distinguishing the sections of the residence, and stores them in the inferrer **10.** Hereinafter, the information for individually distinguishing the sections of the residence is referred to as section information. The section information is preliminarily set when the living activity inference device **1** is installed, for example. A piece of the section information of electric appliance **3** connected to a branch line **L2** is a piece of information indicating the intended purpose and the location where the electric appliance **3** is to be used, and is transmitted from the communication unit **24** of the distribution board **2** to the communicator **11,** for example. The register **15** registers each piece of the section information of electric appliance **3** connected to the branch line **L2** on the inferrer **10** based on the section information received by the communicator **11.**

In the present embodiment, each of the branch lines **L2** is registered on the inferrer **10** in association with a piece of the section information of electric appliance **3** connected to this branch line **L2.** For example, section names such as "living room", "kitchen", "bath room", "bed room", and the like are registered on the inferrer **10,** as the pieces of the section information of electric appliance **3.** With regard to a room that may be used for various purposes, such as a child room which may be used as a living room during day time and a bed room during night time, the piece of section information of electric appliance **3** connected to the branch line **L2** may be changed depending on time periods of a day.

The register **15** does not necessarily register the section information with regard to all the electric appliances **3.** It is sufficient that the register **15** register the section information with regard to electric appliances **3** that are connected to two or more branch lines **L2** of interest which are necessary for inferring the living activity. It is also sufficient that the obtainer **12** obtains data on resource consumption status, namely the power data in the present embodiment, of the two or more branch lines **L2** of interest. It should be noted that power data of the branch lines **L2** that are connected to electric appliances **3** that operate according to a preliminarily determined schedule are not used for inferring the living activity, because change in the power consumed by such electric appliances **3** are not always relevant to the living activity of the resident.

The detector **16** is configured to receive, from the history storage device **14,** the amount of energy for each of the branch lines **L2.** The detector **16** is configured to determine the operational state of the one or more electric appliances **3** connected to the branch line **L2** (whether they are active or inactive) based on a change in the amount of energy obtained by the obtainer **12.** Some electric appliances **3** consume standby energy even when they are inactive. However, in the present embodiment, a state of the electric appliance **3** consuming the standby energy is regarded as inactive.

The detector **16** is configured to, for each of the branch line **L2,** compare the amount of energy of this branch line **L2** with a predetermined threshold to determine whether the one or more electric appliances connected to this branch line **L2** are active or inactive. In this regard, the detector **16** preliminarily sets thresholds used for determining the operational states, based on the amounts of energy that are respectively associated with the branch lines **L2** and stored in the history storage device **14.** Specifically, the detector **16** sets the threshold used for determining the operational state, for each of the branch lines **L2,** to a minimum value of values that satisfy a condition where the amount of energy of the branch line **L2** of interest is kept equal to or less than the value for a predetermined holding time period or more. Hence, the threshold determined by the detector **16** for each of the branch lines **L2** in this manner indicates a peak value of the standby energy for this branch line **L2.**

The storage device **17** stores prior probabilities each defining a probability at which a corresponding one of pre-defined multiple kinds of living activities (in the present embodiment, at-home state, go-out state, and sleep state) occurs in one day. Each of the prior probabilities of the multiple living activities may be an occurrence probability of a corresponding living activity obtained from a result of an actual inferred living activity in the residence of interest for a predetermined period. Alternatively, each of the prior probabilities of the multiple living activities may be a value that has been statistically obtained preliminarily based on a group of users, the jobs, ages, and/or resident areas of which are similar to those of the resident of interest.

The storage device **17** stores probabilities (first conditional probabilities) each defining active and inactive probabilities of the one or more electric appliances **3** belonging to a corresponding section under a condition where a corresponding one of the three kinds of living activities, namely the sleep state, the at-home state, and the go-out state, occurs. This probability can be obtained from a result of collection of actual operational states of the electric appliances **3** detected by the detector **16** and actual living activities of the resident for a predetermined period, and is stored in the storage device **17.** Alternatively, active and inactive probabilities of the one or more electric appliances **3** under a condition where one of the three kinds of living activities, namely the sleep state, the at-home state, and the go-out state, occurs may be obtained preliminarily, and may be stored in the storage device **17.**

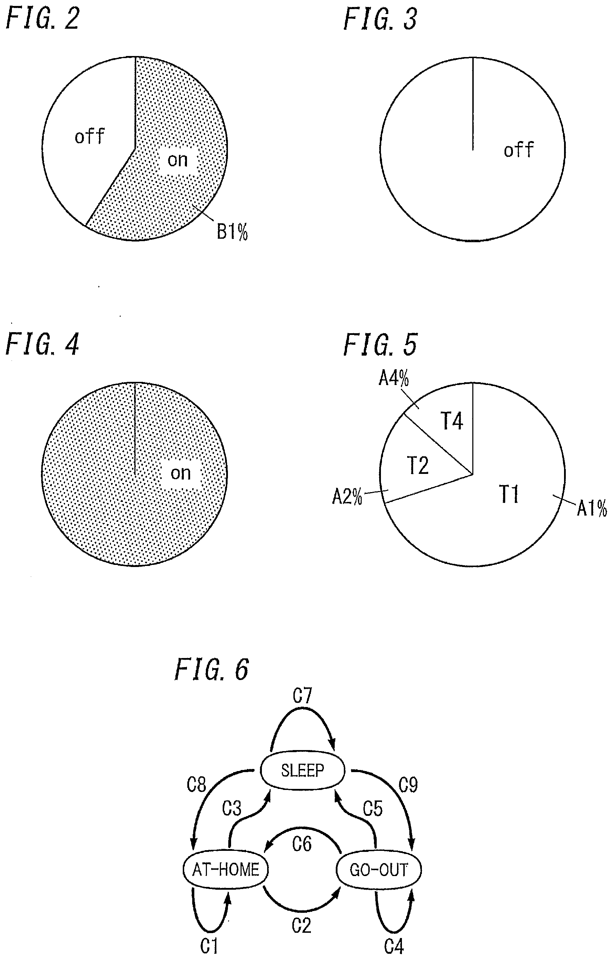

For example, FIG. 2 is a circle graph showing percentages of active (on) and inactive (off) probabilities of the electric appliance **31** belonging to the living room under a condition where the sleep state occurs. In the illustrated example, the active probability is B1 (%). FIG. 3 is a circle graph showing percentages of active and inactive probabilities of the electric appliance **32** belonging to the kitchen under a condition where the sleep state occurs. In the illustrated example, the active probability is 0 (%). In other words, in the example of FIG. 3, the electric appliance **32** is inactive (off). FIG. 4 is a circle graph showing percentages of active and inactive probabilities of the electric appliance **33** belonging to the bed room under a condition where the sleep state occurs. In the illustrated example, the active probability is 100 (%). In other words, in the example of FIG. 4, the electric appliance **33** is active (on).

Further, probabilities (second conditional probabilities) each defining probabilities of occurrence of one of the three kinds of living activities, namely the at-home state, the go-out state, and the sleep state, within respective time periods divided from one day, under a condition where the corresponding living activity occurs, are preliminarily obtained and stored in the storage device **17.** In the example, one day is divided into four time periods. Specifically, a time period of 0:00 to 6:00 is defined as a time period **T1**, a time period of 6:00 to 12:00 is defined as a time period **T2,** a time period of 12:00 to 18:00 is defined as a time period **T3,** and a time period of 18:00 to 24:00 is defined as a time period **T4.** The storage device **17** stores probabilities (second conditional probabilities) each defining probabilities of occurrence of a corresponding one of the three kinds of living activities, namely the at-home state, the go-out state, and the sleep state, within respective time periods **T1**, **T2, T3, T4.** For example, FIG. 5 is a circle graph showing probabilities of occurrence of the sleep state within the four time periods **T1**, **T2, T3,** and **T4,** respectively. In the example of FIG. 5, a probability of occurrence of the sleep state within the time period **T1** is A1 (%), a probability of occurrence of the sleep state within the time period **T2** is A2 (%), a probability of occurrence of the sleep state within the time period **T3** is 0 %, and a probability of occurrence of the sleep state within the time period **T4** is A4 (%). Since the probability of occurrence of the sleep state within the time period **T3** of 12:00 to 18:00 is 0 %, the probability with regard to the time period **T3** is not shown in FIG. 5.

Also, the storage device **17** preliminarily stores transition probabilities each defining probabilities at which the three kinds of living activities, namely the at-home state, the go-out state, and the sleep state, occur subsequent to a corresponding one of the three kinds of living activities. The transition probabilities are obtained by: inferring living activities every predetermined periods; and counting the number of transitions from a living activity at an inference target time to a living activity at a next inference target time based on the inference result, and are stored in the storage device **17.** FIG. 6 shows a state transition diagram of a case where there are three kinds of pre-defined living activities, namely the at-home state, the go-out state, and the sleep state.

In the example of FIG. 6, a transition probability from the at-home state to the at-home state is C1 (%), a transition probability from the at-home state to the go-out state is C2 (%), and a transition probability from the at-home state to the sleep state is C3 (%). Also, a transition probability from the go-out state to the go-out state is C4 (%), a transition probability from the go-out state to the sleep state is C5 (%), and a transition probability from the go-out state to the at-home state is C6 (%). Further, a transition probability from the sleep state to the sleep state is C7 (%), a transition probability from the sleep state to the at-home state is C8 (%), and a transition probability from the sleep state to the go-out state is C9 (%). In general, an event of a transition from the go-out state to the sleep state and an event of a transition from the sleep state to the go-out state are less likely to occur. Therefore, in the example of FIG. 6, the probability C5 of transition from the go-out state to the sleep state and the probability C9 of transition from the sleep state to the go-out state would be zero.

The inputter **18** is a user interface including an operation unit for receiving an input operation and a display unit for displaying the inputted contents. In response to the manipulation on the inputter **18** by the resident, feedback information indicative of a disagreement between an inference result of the living activity inferred by the inferrer **10** and an actual living activity at the inference target time or the like is entered. That is, the inputter **18** is configured to receive the feedback information.

The updater **19** is configured to update at least one of the prior probabilities, the first conditional probabilities, and the second conditional probabilities stored in the storage device **17** based on the feedback information entered through the inputter **18.** The updating process of the storage device **17** performed by the updater **19** is described later.

The inferrer **10** receives, as factual information, the operational state of the one or more electric appliances **3** for each of the branch lines **L2** detected by the detector **16.** The inferrer **10** also receives, as factual information, information that which of time periods **T1**, **T2, T3,** and **T4** an inference target time is contained in, based on information on time of the inference target time. Therefore, the inferrer **10** uses: a collection of the factual information on the operational state of the one or more electric appliances **3** at the inference target time; and the factual information on which time period the inference target time is contained in, as the input information for Bayesian network. The input information for Bayesian network is information determined as a fact, and therefore is referred to as fixed information. Here, the fixed information is also a collective term for the input information for Bayesian network, and thus may include multiple pieces of factual information.

The inferrer **10** retrieves the prior probabilities, the first conditional probabilities, and the second conditional probabilities from the storage device **17** based on the fixed information. The inferrer **10** calculates joint probabilities of the first conditional probabilities and the second conditional probabilities, thereby obtaining probabilities of occurrence of the living activities at the inference target time, respectively, according to Bayes' theorem.

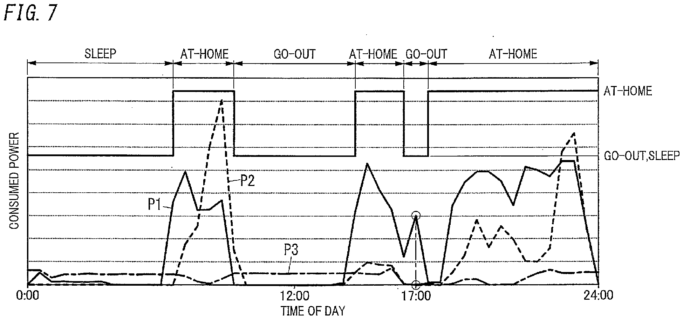

FIG. 7 is a graph illustrating a relationship between: a history of the amount of power **P1** consumed by the electric appliance **31;** a history of the amount of power **P2** consumed by the electric appliance **32;** a history of the amount of power **P3** consumed by the electric appliance **33;** and the living activity of the resident, in one example day. In FIG. 7, the amount of power **P1** consumed by the electric appliance **31** belonging to the living room is drawn by a solid line, the amount of power **P2** consumed by the electric appliance **32** belonging to the kitchen is drawn by a broken line, and the amount of power **P3** consumed by the electric appliance **33** belonging to the bed room is drawn by a dashed-dotted line.

In the example of FIG. 7, when the inferrer **10** attempts to infer the living activity at 17:00, the inferrer **10** retrieves, as a collection of first factual information, the respective operational states at 17:00 of the electric appliances **31, 32,** and **33** from the detector **16.** In the example of FIG. 7, at 17:00, the electric appliance **31** belonging to the living room is active, the electric appliance **32** belonging to the kitchen is inactive, and the electric appliance **33** belonging to the bed room is inactive. The inferrer **10** also obtains, as second factual information, information on a time period in which the inference target time (i.e., 17:00) is contained.

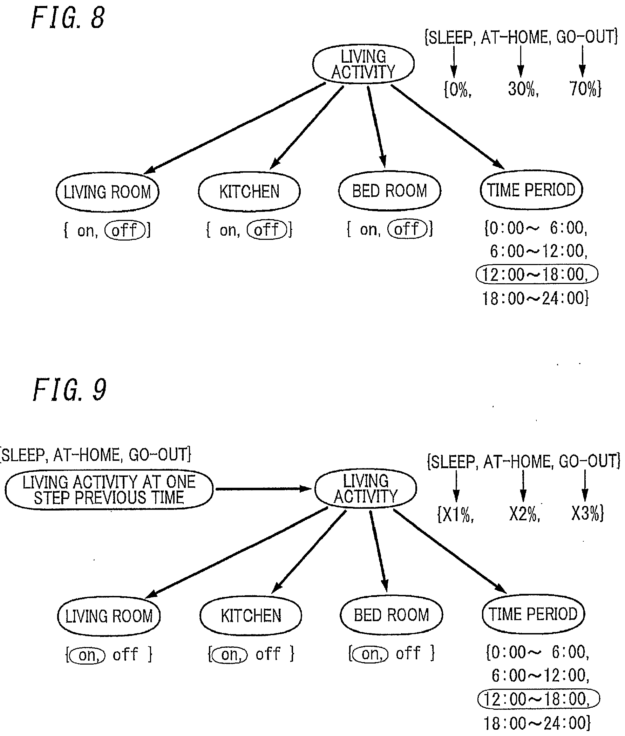

The following explanation referring to Bayesian network shown in FIG. 8 is made to a calculation process by the inferrer **10** for obtaining respective occurrence probabilities at 17:00 of the living activities (at-home state, go-out state, and sleep state). FIG. 8 is a graphical model illustrating a relation among: a living activity of calculation interest; active or inactive probability of each of the electric appliances **31, 32,** and **33** under a condition where the living activity of calculation interest occurs (first conditional probabilities); and a probability of occurrence of the living activity of calculation interest within the time period which the inference target time is contained in (second conditional probabilities). For obtaining the occurrence probability of the at-home state, the inferrer **10** retrieves a prior probability defining a probability at which the at-home state occurs in one day, from the storage device **17.** Also, the inferrer **10** retrieves from the storage device **17** respective pobabilities that the electric appliances **31, 32,** and **33** have the operational states detected by the detector **16** under a condition where the at-home state occurs. With regard to the operational states of the example of FIG. 7 at 17:00, the inferrer **10** retrieves, from the storage device **17,** a probability at which the electric appliance **31** is active under the condition where the at-home state occurs, a probability at which the electric appliance **32** is inactive under the condition where the at-home state occurs, and a probability at which the electric appliance **33** is inactive under the condition where the at-home state occurs. Also, the inferrer **10** retrieves, from the storage device **17,** a probability of occurrence of the at-home state within the time period in which the inference target time is contained (e.g., the time period **T3** from 12:00 to 18:00, when the inference target time is 17:00). The inferrer **10** puts the probabilities retrieved from the storage device **17** into corresponding nodes of Bayesian network to calculate the joint probability, thereby obtaining a probability of occurrence of the at-home state at 17:00. The inferrer **10** also obtains a probability of occurrence of the go-out state at 17:00, and a probability of occurrence of the sleep state at 17:00, in a similar manner.

Calculating the probability of occurrence of the at-home state at the inference target time, the probability of occurrence of the go-out state at the inference target time, and the probability of occurrence of the sleep state at the inference target time, the inferrer **10** determines that a living activity having a highest probability has occurred at that time. Alternatively, the inferrer **10** may be configured to determine that a living activity has occurred at that time when a probability of this living activity is highest and is greater than occurrence probabilities of other living activities by a significant value or more. When determining the living activity that has occurred at the inference target time, the inferrer **10** outputs the inference result, or the respective occurrence probabilities of the living activities.

The inferrer **10** may periodically (for example, every several minutes) performs the inferring operation of the living activity described above, and thereby can infer the living activity of the resident over one day, based on the operational states of the electric appliances **3.** Also, the inferrer **10** can detect changes in the inferred living activities as events. For example, the inferrer **10** may be configured to detect end of the sleep state as a wake-up event, change from the at-home state to the go-out state as a going-out event defined as start of the go-out state, and change from the go-out state to the at-home state as a coming-home event defined as start of the at-home state.

The inferrer **10** may be configured to use the transition probabilities stored in the storage device **17** for the probabilistic inference of the living activity. The following explanation referring to Bayesian network shown in FIG. 9 is made to a calculation process performed by the inferrer **10** for obtaining occurrence probabilities of the living activities at a certain time point using transition probabilities of transition from a living activity at one step previous time.

FIG. 9 is a graph illustrating a relation among: a living activity of calculation interest; a living activity at one step previous time; active or inactive probability of each of the electric appliances **31, 32,** and **33** under a condition where the living activity of calculation interest occurs; and a probability of occurrence of the living activity of calculation interest within the time period in which the inference target time is contained.

When attempting to infer a living activity at a certain time point, the inferrer **10** retrieves, as a collection of the first factual information, the respective operational states at the inference target time of the electric appliances **31, 32,** and **33** from the detector **16.** The inferrer **10** also obtains, as the second factual information, the information on a time period in which the inference target time is contained. The inferrer **10** then calculates the respective probabilities of occurrence of the at-home state, the go-out state, and the sleep state, based on the fixed information including the first factual information and the second factual information.

For example, for obtaining the occurrence probability of the at-home state, the inferrer **10** retrieves a prior probability defining a probability at which the at-home state occurs in one day, from the storage device **17.** Also, the inferrer **10** retrieves respective transition probabilities defining probabilities of transitions to the at-home state from the at-home state, from the go-out state, and from the sleep state, at one step previous time (previous inference target time), respectively, from the storage device **17.** Further, the inferrer **10** retrieves from the storage device **17** the respective probabilities that the electric appliances **31, 32,** and **33** have the operational states detected by the detector **16** under a condition where the at-home state occurs.

The inferrer **10** puts the probabilities retrieved from the storage device **17** into corresponding nodes of Bayesian network to calculate the joint probability, thereby obtaining a probability of occurrence of the at-home state at the inference target time. The inferrer **10** also obtains a probability of occurrence of the go-out state at the inference target time, and a probability of occurrence of the sleep state at the inference target time, in a similar manner.

When the living activity is inferred using the transition probabilities, it is possible to reduce a probability of determining that a living activity that is less likely to occur in daily life has occurred, leading to improvement of inference accuracy of the living activity. For example, in daily life, a transition probability that the go-out state occurs subsequent to the sleep state, and a transition probability that the sleep state occurs subsequent to the go-out state are low. Therefore, it is possible to reduce the possibilities that such living activities are determined to occur.

Preferably, the living activity inference device **1** of the present embodiment allows a user to input the feedback information indicative of a disagreement between an inference result of living activity and an actual living activity (true value) to update the information on the probabilities stored in the storage device **17.**

The following explanation is given to a supposed case where the inferrer **10** of the living activity inference device **1** is configured to transmit an inference result of the living activity to a mobile terminal held by a parent who is out of home so as to allow the parent to grasp the living activity of a child.

The inferrer **10** of the living activity inference device **1** periodically infers the living activity. When detecting that a child comes back the home in which no resident is present, the inferrer **10** determines that a coming-home event occurs, and gives push notification by transmitting, for example, by e-mail, the inference result to the mobile terminal held by the parent. Specifically, the living activity inference device **1** includes the communicator connectable to the telecommunication network such as the Internet and the mobile network. When determining that the coming-home event has occurred, the inferrer **10** transmits, through the communicator, an e-mail indicative of occurrence of the coming-home event to a preliminarily registered mail address of the mobile terminal.

When receiving the push notification from the living activity inference device **1,** the parent can give a call on a telephone in the residence or a mobile phone held by the child to ask whether the child has come home and/or the coming home time, and thereby can determine whether the inference result of the living activity inference device **1** is correct or not.

When the inference result of the living activity inference device **1** is correct, the parent is expected not to enter the feedback information on the living activity inference device **1.** When no feedback information is entered on the living activity inference device **1,** the updater **19** does not update the data on the probabilities stored in the storage device **17.** Since the inference result is correct, there is no problem.

On the other hand, when the inference result of the living activity inference device **1** is not correct, the parent is expected to enter the feedback information on the living activity inference device **1** to update the data on the probabilities stored in the storage device **17.**

In this regard, the following explanation is given to a case where the living activity inference device **1** determines occurrence of a coming-home event and transmits an e-mail indicative of occurrence of the coming-home event to the mobile terminal held by the parent and the parent out of the home thus asks the child whether the child has come home but finds that the child has not come home yet in fact.

In this case, the parent (resident) would confirm a fact that the child has not come home yet when the living activity inference device **1** inferred the occurrence of the coming-home event and a time when the child actually came home. After coming home, the parent can operate the inputter **18** to enter the actual coming-home time.

Then, the updater **19** performs the updating process of the storage device **17** based on the feedback information entered through the inputter **18.** For example, it is supposed that the inferrer **10** determines that the coming-home event has occurred at 16:00, but nevertheless the actual coming-home event has occurred at 17:00. In this case, the parent can use the inputter **18** to enter the information indicating that the inference that the coming-home event has occurred at 16:00 is incorrect and the actual coming-home event has occurred at 17:00.

In this case, a time period of the go-out state is prolonged. Therefore, the updater **19** updates the first conditional probabilities so that, with regard to an electric appliance **3** determined to be active under the condition where the go-out state occurs, the active probability under the condition where the go-out state occurs is increased by a certain value. Also, the updater **19** updates the first conditional probabilities so that, with regard to an electric appliance **3** determined to be inactive under the condition where the go-out state occurs, the inactive probability under the condition where the go-out state occurs is increased by a certain value.

Also, a time period of the at-home state is shortened. Therefore, the updater **19** updates the first conditional probabilities so that, with regard to an electric appliance **3** determined to be active under the condition where the at-home state occurs, the active probability under the condition where the at-home state occurs is decreased by a certain value. Also, the updater **19** updates the first conditional probabilities so that, with regard to an electric appliance **3** determined to be inactive under the condition where the at-home state occurs, the inactive probability under the condition where the at-home state occurs is decreased by a certain value.

Also, the updater **19** updates to increase the prior probability at which the go-out state occurs in one day by a certain value, and changes the second conditional probabilities at which the go-out state occurs within the respective time periods **T1**, **T2, T3,** and **T4.** Also, the updater **19** updates to decrease the prior probability at which the at-home state occurs in one day by a certain value, and changes the second conditional probabilities at which the at-home state occurs within the respective time periods **T1**, **T2, T3,** and **T4.**

Explained next is a case where the living activity inference device **1** fails to infer that the coming-home event has occurred, though the child actually has come home.

The parent confirms that the child has already come home by calling on the telephone in the residence or the mobile phone held by the child, without notified by the living activity inference device **1** of occurrence of the coming-home event. In this case, the parent can hear the actual coming-home time from the child. Then, after coming home, the parent can operate the inputter **18** to enter the actual coming-home time.

Then, the updater **19** performs the updating process of the storage device **17** based on the feedback information entered through the inputter **18.** For example, it is supposed that the child actually has come home at 15:00, but nevertheless the inferrer **10** has inferred that the go-out state continues after this time. In this case, the parent can use the inputter **18** to enter the information indicating that the inference that the go-out state after 15:00 is incorrect and the coming-home event has occurred at 15:00.

In this case, a time period of the go-out state is shortened. Therefore, the updater **19** updates the first conditional probabilities so that, with regard to an electric appliance **3** determined to be active under the condition where the go-out state occurs, the active probability under the condition where the go-out state occurs is decreased by a certain value. Also, the updater **19** updates the first conditional probabilities so that, with regard to an electric appliance **3** determined to be inactive under the condition where the go-out state occurs, the inactive probability under the condition where the go-out state occurs is decreased by a certain value.

Also, a time period of the at-home state is prolonged. Therefore, the updater **19** updates the first conditional probabilities so that, with regard to an electric appliance **3** determined to be active under the condition where the at-home state occurs, the active probability under the condition where the at-home state occurs is increased by a certain value. Also, the updater **19** updates the first conditional probabilities so that, with regard to an electric appliance **3** determined to be inactive under the condition where the at-home state occurs, the inactive probability under the condition where the at-home state occurs is increased by a certain value.

Also, the updater **19** updates to increase the prior probability at which the at-home state occurs in one day by a certain value, and changes the second conditional probabilities at which the at-home state occurs within the respective time periods **T1**, **T2, T3,** and **T4.** Also, the updater **19** updates to decrease the prior probability at which the go-out state occurs in one day by a certain value, and changes the second conditional probabilities at which the go-out state occurs within the respective time periods **T1**, **T2, T3,** and **T4.**

As described above, the updater **19** updates the data on probabilities which is stored in the storage device **17** and related to the feedback information, based on the feedback information entered through the inputter **18.** Accordingly, the inference accuracy of the living activity can be improved.

In the present embodiment, the inferrer **10** is configured to perform a process of detecting change in the inference result with regard to the living activities as an event, and record a pattern of occurrence of the event in one day. The inferrer **10** may be configured to determine that there is irregularity in occurrence of the living activities when an occurrence timing of the event detected after the pattern is recorded does not conform to the pattern.

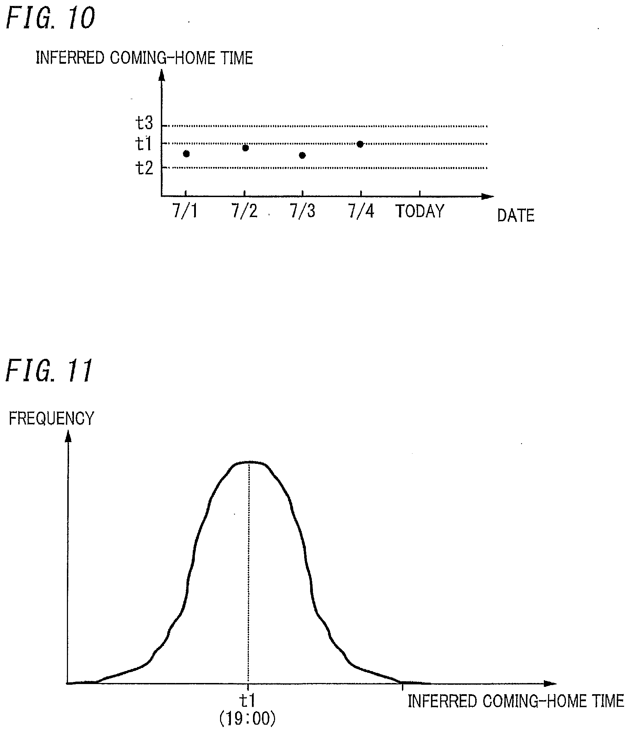

For example, it will be explained a case where a result of recording the coming-home event of the resident by the inferrer **10** every weekday shows an occurrence time of the coming-home event (inferred coming-home time) changes as shown in FIG. 10. FIG. 11 is a graph showing a frequency distribution of the inferred coming-home time, and the frequency distribution of the inferred coming-home time shows a normal probability distribution of which average time is t1. The inferrer **10** refers to the history of the inferred coming-home time, and determines that there is irregularity in occurrence of the living activities when a time at which a coming-home event has determined to have occurred is out of a given range including the average time t1 (for example, the given range indicates a period from a time t2 to a time t3, and this period corresponds to the "pattern" mentioned in the present disclosure). When determining that there is irregularity in occurrence of the living activities, the inferrer **10** gives push notification by transmitting an e-mail informing that there is irregularity in occurrence of the living activities, to the mobile terminal owned by the parent through the communicator, for example. In this case, the coming-home event of the resident is recorded every weekday. Alternatively, the coming-home event may be recoded every day of the week on which the resident has almost the same life rhythm.

Explained above is a case for detecting presence of irregularity with regard to the coming-home event. Alternatively, presence of irregularity with regard to the wake-up event may be detected so that irregularity in the wake-up event can be informed. For example, the inferrer **10** may record a pattern of the wake-up event of the resident everyday, and may determine that there is irregularity in occurrence of the living activities when a wake-up event occurs at a time not conforming to the pattern. This example may be applied to a system for detecting a trouble in a person who lives alone.

As described above, the living activity inference device **1** of the present embodiment includes the obtainer **12,** the detector **16** (appliance operation detector), the storage device **17,** and the inferrer **10** (activity inferrer). The obtainer **12** is configured to obtain, for each of sections of a residence, data on a resource consumption status of one or more appliances (one or more electric appliances **3** in the present embodiment) belonging to a corresponding one of the sections. The detector **16** is configured to determine, for each of the sections, an operational state indicative of whether the one or more appliances belonging to a corresponding one of the sections are active or inactive, from the data on the resource consumption status obtained by the obtainer for each of the sections. The storage device **17** is configured to preliminarily store the prior probabilities, the first conditional probabilities, and the second conditional probabilities. The prior probabilities each define a probability at which a corresponding one of pre-defined multiple kinds of living activities occurs in one day. The first conditional probabilities each define active and inactive probabilities of the one or more appliances belonging to a corresponding one of the sections under a condition where a corresponding one of the multiple kinds of living activities occurs. The second conditional probabilities each define probabilities of occurrence of a corresponding one of the multiple kinds of living activities within respective time periods divided from one day under a condition where the corresponding one of the multiple kinds of living activities occurs. The inferrer **10** is configured to calculate, for each of the multiple kinds of living activities, an occurrence probability defining a probability that a corresponding one of the multiple kinds of living activities occurs at an inference target time, according to Bayes' theorem based on the operational state of the one or more appliances determined by the detector **16** for each of the sections at the inference target time by use of the prior probabilities, the first conditional probabilities, and the second conditional probabilities. The inferrer **10** is also configured to infer that a living activity having a highest occurrence probability of the multiple kinds of living activities has occurred at the inference target time.

The inferrer **10** calculates, for each of the multiple kinds of living activities, an occurrence probability according to the Bayes' theorem by use of the prior probabilities, the first conditional probabilities, and the second conditional probabilities stored in the storage device **17** with the operational states at the inference target time of the appliances as the input information. Therefore, it is possible to determine which of probabilities of occurrence of the living activities is the highest, from the occurrence probabilities defining probabilities of occurrence of the multiple kinds of living activities. Accordingly, it is possible to infer the living activity at the inference target time with an improved accuracy compared to the conventional example.

In the living activity inference device **1,** the one or more appliances are one or more electric appliances **3,** and the distribution board **2** in the residence is connected to the branch lines **L2.** Each of the branch lines **L2** is connected to at least one electric appliance **3** of the one or more electric appliances **3** belonging to a corresponding one of the sections, and delivers electricity from the distribution board **2** to the at least one of the one or more electric appliances **3** connected thereto. The obtainer **12** is preferably configured to obtain, for each of the branch lines **L2,** power data. In general, one or more electric appliances **3** belonging to the same section in the residence are connected to the same branch line **L2.** Therefore, the detector **16** can determine, for each of the sections, whether the one or more electric appliances **3** in this section are active or inactive, from the consumption status of the amount of energy obtained by the obtainer **12** for each of the branch lines **L2.**

In the living activity inference device **1,** the storage device **17** may be configured to preliminarily store transition probabilities each defining probabilities at which the multiple kinds of living activities occur subsequent to a corresponding one of the multiple kinds of living activities. The inferrer **10** is preferably configured to further use the transition probabilities for calculating, for each of the multiple kinds of living activities, the occurrence probability at the inference target time. Some of the living activities are less likely to occur subsequent to a certain living activity. Therefore, the inference accuracy of the living activity can be improved by using the transition probabilities for inferring the living activity.

The living activity inference device **1** may further include the inputter **18** and the updater **19.** The inputter **18** is configured to receive feedback information indicative of a disagreement between an inference result of the inferrer **10** and an actual living activity of a user at the inference target time. The updater **19** is configured to update at least one of the prior probabilities, the first conditional probabilities, and the second conditional probabilities stored in the storage device **17,** based on the feedback information received through the inputter **18.** The updater **19** updates the information on the probabilities stored in the storage device **17** based on the feedback information, and this can lead to improvement of the inference accuracy of the living activity.

In the living activity inference device **1,** preferably, the multiple kinds of living activities include the at-home state, the go-out state, and the sleep state. With this configuration, the living activity of the resident can be inferred based on the classification of the at-home state, the go-out state, and the sleep state. However, the living activities to be inferred by the inferrer **10** are not limited to the at-home state, the go-out state, and the sleep-state. For example, the inferrer **10** may be configured to infer more detailed living activities in the residence, such as a at-table state, and a bathing state.

In the living activity inference device **1,** the inferrer **10** is configured to periodically perform a process of detecting change in an inference result with regard to the multiple kinds of living activities as an event, and record a pattern (pattern repeated everyday) of occurrence of the event in one day. The inferrer **10** may be configured to determine that there is irregularity in occurrence of the multiple kinds of living activities when an occurrence timing of an event detected after the pattern is recorded does not conform to the pattern. The inferrer **10** can infer the living activity from the result of the resource consumption status of the one or more appliances for each section, and can determine the irregularity in occurrence of the living activities.

The program according to the present embodiment is a program that causes, when executed on a computer, the computer to function as the living activity inference device 1. The program may be recorded on a computer readable recording medium. The computer may execute the program recorded on the recoding medium, or the computer may install the program recorded on the recording medium and execute the installed program. The program may be provided through the telecommunication network such as the Internet.

The present embodiment is described with an example where the appliances consuming the resource are electric appliances. However, the appliances may be gas appliances consuming gas, or water consuming appliances (such as a faucet, a toilet, and a bathtub) consuming water. In the case of the gas appliances, operational states of the gas appliances can be determined from the gas consumption statuses. The gas consumption status can be obtained from a flow rate of the gas measured by a flow meter provided in a flow channel of the gas, or information measured by sensors provided to the gas appliances. In the case of water consuming appliances, operational states of the water consuming appliances can be determined from the water consumption statuses. The water consumption status can be obtained from a flow rate of water measured by a flow meter provided in a flow channel of the water, or information measured by sensors provided to the water consuming appliances.

The present embodiment described above is a mere example of the present invention, and the scope of the present invention is not limited to the embodiment described above but includes other embodiments and numerous modifications and variations of the aforementioned embodiment without departing from the technical concept of the present invention.

## Claims

1. A living activity inference device, comprising:
an obtainer configured to obtain, for each of sections of a residence, data on a resource consumption status of one or more appliances belonging to a corresponding one of the sections;
an appliance operation detector configured to determine, for each of the sections, an operational state indicative of whether the one or more appliances belonging to a corresponding one of the sections are active or inactive, from the data on the resource consumption status obtained by the obtainer for each of the sections;
a storage device configured to preliminarily store
prior probabilities each defining a probability at which a corresponding one of pre-defined multiple kinds of living activities occurs in one day,
first conditional probabilities each defining active and inactive probabilities of the one or more appliances belonging to a corresponding one of the sections under a condition where a corresponding one of the multiple kinds of living activities occurs, and
second conditional probabilities each defining probabilities of occurrence of a corresponding one of the multiple kinds of living activities within respective time periods divided from one day under a condition where the corresponding one of the multiple kinds of living activities occurs; and
an activity inferrer configured to
calculate, for each of the multiple kinds of living activities, an occurrence probability defining a probability that a corresponding one of the multiple kinds of living activities occurs at an inference target time, according to Bayes' theorem based on the operational state of the one or more appliances determined by the appliance operation detector for each of the sections at the inference target time by use of the prior probabilities, the first conditional probabilities, and the second conditional probabilities, and
infer that a living activity having a highest occurrence probability of the multiple kinds of living activities has occurred at the inference target time.

2. The living activity inference device of claim 1, wherein
the one or more appliances are one or more electric appliances,
a distribution board in the residence is connected to branch lines,
each of the branch lines is connected to at least one of the one or more electric appliances belonging to a corresponding one of the sections, and delivers electricity from the distribution board to the at least one of the one or more electric appliances connected thereto, and
the obtainer is configured to obtain, for each of the branch lines, power data.

3. The living activity inference device of claim 1 or 2, wherein
the storage device is configured to preliminarily store transition probabilities each defining probabilities at which the multiple kinds of living activities occur subsequent to a corresponding one of the multiple kinds of living activities, and
the activity inferrer is configured to further use the transition probabilities for calculating, for each of the multiple kinds of living activities, the occurrence probability at the inference target time.

4. The living activity inference device of any one of claims 1 to 3, further comprising:
an inputter configured to receive feedback information indicative of a disagreement between an inference result of the activity inferrer and an actual living activity of a user at the inference target time, and
an updater configured to update at least one of the prior probabilities, the first conditional probabilities, and the second conditional probabilities stored in the storage device, based on the feedback information received through the inputter.

5. The living activity inference device of any one of claims 1 to 4, wherein the multiple kinds of living activities include an at-home state, a go-out state, and a sleep state.

6. The living activity inference device of any one of claims 1 to 5, wherein
the activity inferrer is configured to
periodically perform a process of detecting change in an inference result with regard to the multiple kinds of living activities as an event,
record a pattern of occurrence of the event in one day, and
determine that there is irregularity in occurrence of the multiple kinds of living activities when an occurrence timing of the event detected after the pattern is recorded does not conform to the pattern.

7. A program that when executed on a computer, causes the computer to function as the living activity inference device of any one of claims 1 to 6.
